# EUROPEAN PATENT APPLICATION

(11) **EP 1 564 530 A1**
(43) Date of publication of application: **17.08.2005**
(21) Application number: 05250532.8
(22) Date of filing: 01.02.2005
(51) Int. Cl.: G01D 5/347

(54) **Optical encoder for detection of rotary and axial movement**

(30) Priority: 03.02.2004 JP 2004026966
(71) Applicant: FANUC LTD, Minamitsuru-gun, Yamanashi 401-0597 (JP)
(72) Inventor: Kawai, Tomohiko, Minamitsuru-gun, Yamanashi 401-0304 (JP); Taniguchi, Mitsuyuki, Gotenba-shi, Shizuoka, 412-0045 (JP); Oda, Takayuki c/o Room 12-204, FANUC, Minamitsuru-gun, Yamanashi 401-0511 (JP)
(74) Representative: Billington, Lawrence Emlyn

(57) **Abstract**

A monitoring apparatus monitors the amplitude of an electrical signal generated on the basis of light detected by a light receiving part (4) of an optical encoder from a light source part (2) and, using the monitored result, a displacement between a moving scale (1) and fixed slits (3) of the optical encoder (or a displacement of a moving part (8) of a motor to which the optical encoder is attached) is detected. Further, a load applied to the moving part (8) of the motor provided with the optical encoder is detected using the monitored result.

## Description

### BACKGROUND OF THE INVENTION

### Field of the Invention

The present invention relates to a monitoring apparatus for an optical encoder that detects the position or speed of a motor driving, for example, a shaft of a machine tool or industrial robot or the like, as well as a monitoring apparatus for a motor to which the optical encoder is attached.

### Description of the Related Art

An optical encoder is widely used for detecting, for example, the position or speed of a servomotor driving a shaft of a machine tool or industrial robot. In general, an optical encoder is configured to receive transmitted light or reflected light that is encoded by a moving scale by means of light receiving elements through fixed slits, to form electrical signals as output of the encoder. Although a suitable clearance is provided between a moving scale and fixed slits, this clearance may sometimes fluctuate. For example, in a case where an encoder is attached to an air bearing motor, when an excessive load is applied in a direction perpendicular to a position reading direction of the moving scale or a direction of movement (rotational direction) of a moving part of the motor, an air bearing surface of the stator and the rotor come into contact, and in the worst case this can result in destruction of the motor.

Therefore, it can be considered that an appropriate step such as an emergency stop or the like should be carried out when a moving scale and fixed slits become abnormally close, by monitoring the distance between the moving scale and the fixed slits. Technology has already been proposed which detects the distance between a moving scale and fixed slits by a separately provided displacement sensor or the like, and it is possible to monitor the distance between a moving scale and fixed slits using this technology.

However, incorporating a separately provided displacement sensor or the like into an optical encoder makes the size of the encoder larger and complicates the structure thereof. It is also disadvantageous in terms of cost.

### SUMMARY OF THE INVENTION

This invention solves the foregoing problems of the conventional art by utilizing a phenomenon whereby when a distance between fixed slits and a moving scale of an optical encoder fluctuates, such fluctuation is reflected in the amount of light received by light receiving elements, to thereby enable detection of a change in the distance between a moving scale and fixed slits or a state represented by that change.

That is, in general, when a moving scale of an optical encoder is displaced such that it becomes relatively closer to fixed slits, the amplitude of the amount of light received (range of variation in amount of light received caused by movement of the moving scale) by light receiving elements increases, and the amplitude of output current also increases accordingly, and when the moving scale is displaced in the opposite direction, the amplitude of the amount of light received by the light receiving elements and the amplitude of output current both decrease. Therefore, by monitoring the amplification of output of the light receiving elements it is possible to detect a displacement between the moving scale and fixed slits without providing a separate sensor.

According to a first aspect of this invention, there is provided a monitoring apparatus which monitors an amplitude of an electrical signal generated on the basis of a light detected by a light receiving part of an optical encoder and; based on the monitoring result, detects a displacement between fixed slits and a moving scale that comprise the optical encoder.

According to a second aspect of this invention, there is provided a monitoring apparatus which monitors an amplitude of an electrical signal generated on the basis of a light detected by a light receiving part of an optical encoder and, based on the monitoring result, detects an excessive load that is applied in a perpendicular direction relative to a position reading direction of the optical encoder.

According to a third aspect of this invention, there is provided a monitoring apparatus which monitors an amplitude of an electrical signal generated on the basis of a light detected by a light receiving part of an optical encoder and, based on the monitoring result; detects a displacement of a moving part of a motor to which the optical encoder is attached in a perpendicular direction relative to a direction of movement of the moving part.

Further, according to a fourth aspect of this invention, there is provided a monitoring apparatus which monitors an amplitude of an electrical signal generated on the basis of a light detected by a light receiving part of an optical encoder and, based on the monitoring result, detects an excessive load that is applied to a moving part in a motor to which the optical encoder is attached in a perpendicular direction relative to a direction of movement of the moving part.

The aforementioned motor to which an optical encoder is attached may be a fluid bearing motor.

According to this invention, a displacement between a moving scale and fixed slits in an optical encoder having a light source, a moving scale, fixed slits and a light receiving part can be detected without providing a separate displacement sensor or the like. It is thus possible to provide a monitoring apparatus that is also advantageous with respect to cost without resulting in a complicated structure or an increase in the size of the apparatus.

The monitoring apparatus can also be utilized as an apparatus which detects an excessive load applied in a perpendicular direction relative to a position reading direction of an encoder, or an excessive load or a displacement or the like in a perpendicular direction relative to a direction of movement of a moving part of a motor.

### BRIEF DESCRIPTION OF THE DRAWINGS

The objects and features of this invention described above and other objects and features of the invention will be apparent from the embodiments described below referring to the attached drawings. The drawings are briefly described hereunder.
Fig. 1 is a sectional view showing an outline of the structure of an optical encoder to which a first embodiment of the monitoring apparatus according to this invention is applied;
Fig. 2A and Fig. 2B are views that respectively show waveforms of signals of A phase and B phase obtained by one light receiving element of an optical encoder. Fig. 2A shows an example of waveforms obtained when a moving scale comprising the optical encoder is in an appropriate position with respect to fixed slits, while Fig. 2B shows an example of waveforms obtained when the moving scale has approached the fixed slits;
Fig. 3 is a view showing an example of the configuration of a circuit that monitors a displacement between a moving scale and fixed slits, which is used in each embodiment of the monitoring apparatus according to this invention;
Fig. 4 is a sectional view showing an outline of the structure of a motor attached with an optical encoder, for which the second embodiment of the monitoring apparatus of this invention is applied; and
Fig. 5 is a sectional view showing an outline of the structure of a fluid bearing motor attached with an optical encoder, for which the third embodiment of the monitoring apparatus of this invention is applied.

### DESCRIPTION OF THE EMBODIMENTS

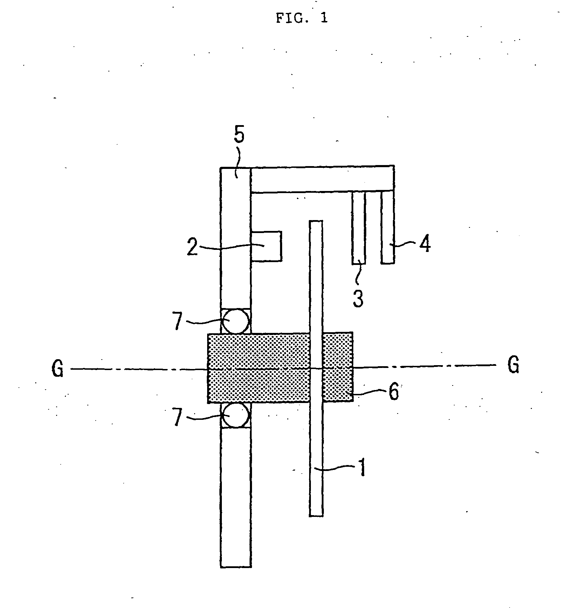

Fig. 1 is a sectional view showing an outline of the structure of an optical encoder to which the monitoring apparatus according to this invention is applied.

In Fig. 1, reference numeral 1 denotes a disc-shapedmoving scale on which an optical code is formed in a known manner in a pattern of light transmitting area/nontransparent area, and the moving scale 1 is supported on a moving scale support member 6. The moving scale support member 6 is attached to an object that is the subject of detection (target object for detection of position and speed), such as a rotating shaft of a motor, or alternatively one part of the object that is the subject of detection itself comprises the moving scale support member 6.

A light source part denoted by reference numeral 2 comprises, for example, one or a plurality of LEDs, and irradiates light onto the moving scale 1. The light source part 2 emits light by a light emission driving circuit (not shown). Light emitted from the light source part 2 is modulated in accordance with a rotational movement of the target object for detection and outputted as transmitted light. The modulated transmitted light comprises signal light of a plurality of channels including A phase, B phase and the like. On the light output side of the moving scale 1 are disposed fixed slits 3 having apertures (illustration is omitted in the figure) provided for each channel, such that signal light of each channel passes through the respective aperture.

A light receiving part 4 is disposed in a position separated from the fixed slits 3 by a given distance. The light receiving part 4 has light receiving elements of a number that corresponds to the number of channels, and an electrical signal light of A phase, B phase and the like is generated by each light receiving element. The light source part 2, the fixed slits 3 and the light receiving part 4 are supported in a fixed manner by an optical element support member 5 such that the relative positional relationship between these elements is always constant. The optical element support member 5 also has a function to support the moving scale support member 6 through bearings 7 such that the moving scale support member 6 can rotate freely around an axis G-G.

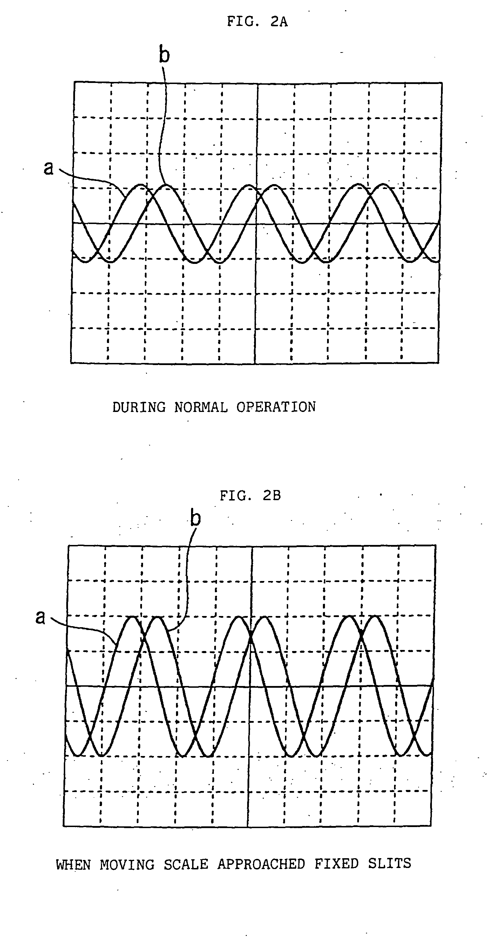

Here, changes in the amplitude of signals obtained by each light receiving element of the light receiving part 4 when a change occurs in the clearance between the moving scale 1 and the fixed slits 3 in an optical encoder having this structure are discussed referring to Fig. 2A and Fig. 2B. In the figures, the vertical axis represents the output voltage level, and the horizontal axis represents the temporal axis. Further, an A-phase waveform is denoted by reference numeral a, and a B-phase waveform is denoted by reference character b.

The waveforms shown in Fig. 2A are obtained at the time of normal operation for A-phase and B-phase signals obtained by each light receiving element of the light receiving part 4. If the moving scale 1 is displaced from the position at normal operation to approach the fixed slits 3, the waveforms obtained would be those in which the amplitude increased, as shown in Fig. 2 B. The reason is that when the moving scale 1 approaches the fixed slits 3, the peak intensity of received light of each light receiving element naturally increases. For the same reason, when the moving scale 1 is displaced such that it moves away from the fixed slits 3, waveforms are obtained in which the amplitude is reduced to less that that of the waveforms shown in Fig. 2 A with respect to each phase.

Therefore, by detecting the amplitude of a signal of any phase (in this case, A phase or B phase) obtained by the respective light receiving elements of the light receiving part 4, it is possible to monitor a displacement between the moving scale 1 and the fixed slits 3.

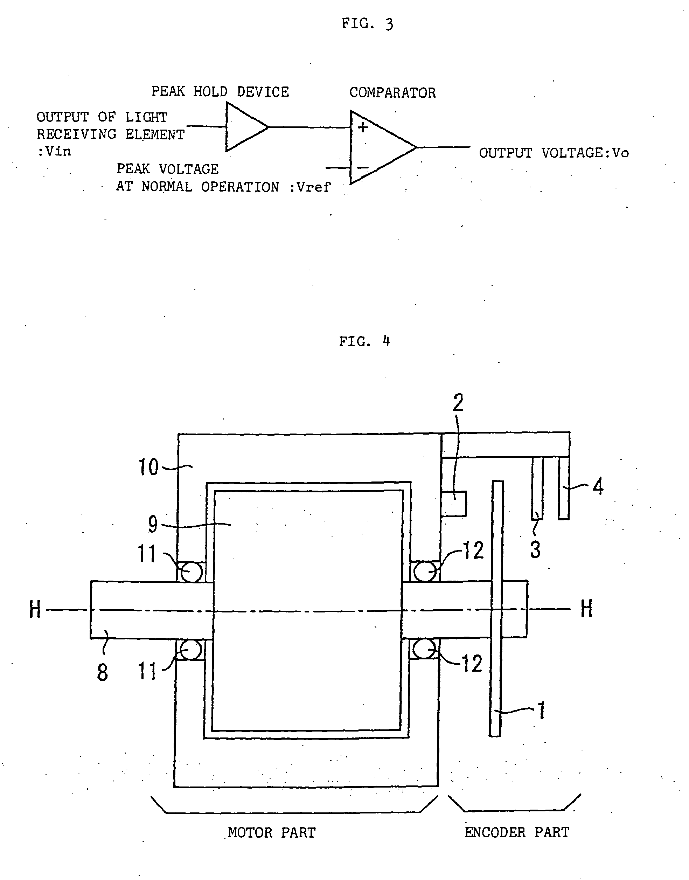

Fig. 3 depicts an example of a configuration of a circuit for monitoring a displacement between a moving scale and fixed slits. As shown in the figure, a circuit for monitoring a displacement between a moving scale and fixed slits has a peak hold device and a comparator, wherein an output of a light receiving element Vin is held as a peak voltage by the peak hold device and compared with a peak voltage at normal operation Vref to obtain an output voltage Vo as a monitored output.

Although an A-phase or B-phase signal can be used for the light receiving element output Vin, a signal of a different phase can also be used, as long as it allows displacement between a moving scale and fixed slits to be detected in the form of amplitude. It is also possible to mix signals of a plurality of phases. Further, a peak voltage value at normal operation that is previously set may be employed for the peak voltage at normal operation Vref. The monitored output Vo may be displayed by a suitable display means (such as a meter or numerical display; illustration thereof is omitted from the figure), or it is possible to provide a known circuit to conduct a level check for the monitored output Vo and to set an upper limit and a lower limit for a normal range so that an operator can be notified of a deviation from those limits by an alarm or the like. Means for notifying or displaying monitored output and the like are known in general, and therefore a detailed description thereof has been omitted herein.

Since the distance between the moving scale 1 and the fixed slits 3 is always constant during normal operation (although, an extremely slight fluctuation exists due to vibration or the like), it can be considered that a change in the distance between the moving scale 1 and the fixed slits 3 indicates that an abnormal load (force having a component in a perpendicular direction with respect to a reading direction) is being applied to the moving scale 1 or an object (moving scale support member 6) that supports the moving scale 1. Therefore, the aforementioned monitored output Vo can be used as an indicator that detects an overload. For example, a suitable threshold value may be previously set for the absolute value of the monitored output Vo, such that, when the absolute value of monitored output Vo exceeds the threshold value, displaying or issuing of alarm or the like is performed to notify an operator of an overload.

According to the above-described embodiments, a displacement between fixed slits and a moving scale of an optical encoder or a load applied to a moving scale is monitored by utilizing received output of an encoder and the circuit of Fig. 3. In a case where a moving scale is connected to a rotating shaft of a motor, it is possible to monitor a load or displacement in a direction perpendicular to a movement direction (direction of rotational movement) of a moving part of a motor. Fig. 4 is a sectional view showing a configuration example of a motor attached with an optical encoder in that case.

As shown in Fig. 4, the overall configuration of a motor attached with an optical encoder is broadly divided into an encoder part and a motor part. The fundamental structure and functions of the encoder part are the same as those of the encoder part shown in Fig. 1 as described above. More specifically, reference numeral 1 denotes a disc-shapedmoving scale on which an optical code is formed in a known manner in a pattern of light transmitting area/nontransparent area, wherein the moving scale 1 receives light from a light source part 2 having one or a plurality of LEDs and modulates the received light to generate a signal light of a plurality of channels including A phase and B phase. Similarly to the above embodiment, signal light of each channel passes through respective apertures of fixed slits 3 and is received by a light receiving part 4, and the light receiving part 4 outputs electrical signals that correspond to the signal light of each channel.

The motor part is composed of a stator 10 and a rotor 9 that is supported by a motor shaft 8. The motor shaft 8 is supported by bearings 11 and 12 such that the motor shaft 8 can rotate freely around an axis H-H. The bearings 11 and 12 are, for example, rolling bearings or sliding bearings or the like, and are not fluid bearings (an example using fluid bearings is described later). The light source part 2, the fixed slits 3 and the light receiving part 4 are supported in a fixed manner by the stator 10 such that the relative positional relationship between these elements is always constant.

In this example, the moving scale 1 is attached to the motor shaft 8, and the fundamental function of the encoder part is to determine the rotational position/speed of the motor shaft 8. A detailed description of this fundamental function is omitted herein as it does not directly relate to the present invention and the fundamental function is known to those skilled in the art.

In a motor attached with an optical encoder having this structure, if the rotor 9 (movingpart of the motor) is displaced in a perpendicular direction (direction along the axis H-H) relative to the direction of movement thereof (direction of rotation), the moving scale 1 undergoes the same displacement as the rotor 9. More specifically, if the rotor 9 in Fig. 4 is displaced in a rightward direction, the moving scale 1 is displaced to approach the fixed slits 3, and if the rotor 9 is displaced in a leftward direction, the moving scale 1 is displaced to move away from the fixed slits 3. As described in the foregoing, this kind of displacement of the moving scale results in a change in the amplitude of signals obtained by the respective light receiving elements of the light receiving part 4. The manner in which the change occurs is as described above referring to Fig. 2A and Fig. 2B.

Thus, similarly to the case of the aforementioned embodiment, by detecting the amplitude of a signal of any phase (in this case, A phase or B phase) obtained by the respective light receiving elements of the light receiving part 4, a displacement between the moving scale 1 and the fixed slits 3 can be identified, enabling a displacement in a perpendicular direction (direction along the axis H-H) relative to the movement direction (direction of rotational movement of the rotor 9) of the rotor 9 (moving part of the motor) to be monitored. The monitoring circuit shown in Fig. 3 can also be applied to this embodiment. More specifically, as with the aforementioned embodiment, an output Vin of a light receiving element of the light receiving part 4 is held as a peak voltage by a peak hold device, and this value is then compared with a peak voltage Vref at normal operation to obtain an output voltage Vo as a monitored output. An A-phase or B-phase signal can be used for the output Vin of the light receiving element, and a signal of a different phase may also be used as long as it allows displacement between a moving scale and fixed slits to be detected in the form of amplitude. It is also possible to mix signals of a plurality of phases.

Further, a peak voltage value that was measured during a normal operation may be used as peak voltage Vref at normal operation. The description concerning notification or display or the like of a monitored output of the foregoing embodiment is also applicable to this embodiment. More specifically, the monitored output Vo may be displayed by means of a suitable display means (such as a meter or numerical display; illustration thereof is omitted from the figure), or it is possible to provide a known circuit to conduct a level check for the monitored output Vo and to set an upper limit and a lower limit for a normal range so that an operator can be notified of a deviation from those limits by an alarm or the like.

In this connection, since the rotor 9 of the motor is maintained at a constant position on the axis H-H during normal operation (though an extremely slight fluctuation exists due to vibrations and the like), the distance between the fixed slits 3 and the moving scale 1 that is fixed on the rotating shaft 8 of the rotor 9 is also constant during normal operation. Therefore, it can be considered that a change in the distance between the moving scale 1 and the fixed slits 3 indicates that an abnormal load (force having a component in a perpendicular direction relative to a movement direction) is being applied to the rotor 9 that is the moving part of the motor. Utilizing this fact, it is possible to use the aforementioned monitored output Vo as an indicator for detecting an excessive load applied to the moving part (rotor 9) of the motor in a perpendicular direction relative to the direction of movement thereof.

The monitored output Vo represents an external force applied to the motor shaft 8, because, as the greater the external force applied to the motor shaft 8 is, the more the displacement in the perpendicular direction relative to the rotational direction is. In Fig. 4, when a force which acts to cause a displacement in the rightward direction is applied, Vo shows a positive value, and when a force which acts to cause a displacement in the direction away from the fixed slits 3 is applied, Vo shows a negative value. Thus, for example, a suitable threshold value may be previously set for the absolute value of the monitored output Vo, so that, when an absolute value of the monitored output Vo exceeds that threshold value, displaying or issuing of alarm or the like is performed to notify an operator of an excessive load.

Although rolling bearings, sliding bearings or the like are used in the example shown in Fig. 4 for the bearings that support the motor shaft 8 in a state in which the motor shaft 8 can rotate freely, monitoring can be conducted in a similar manner by applying this invention to a motor (fluid bearing motor) using fluid bearings that use a fluid such as air, oil, water or gas.

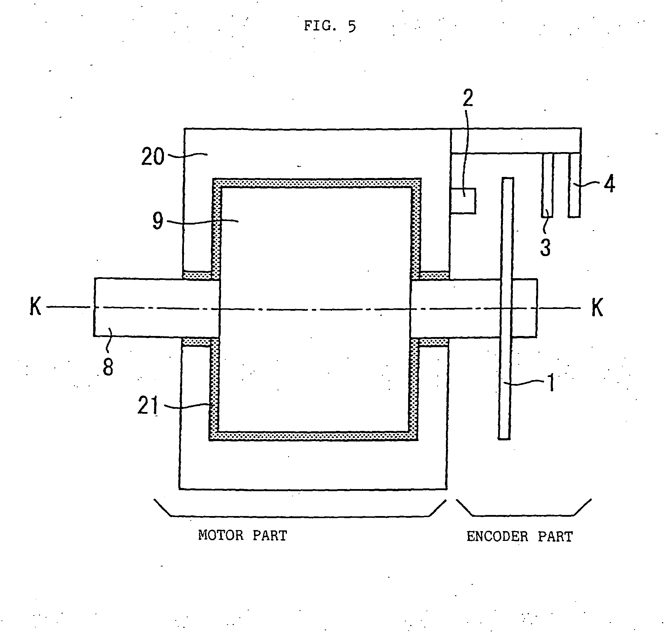

Fig. 5 shows an example of a fluid bearing motor attached with an optical encoder, having an overall configuration that is broadly divided into an encoder part and a fluid bearing motor part. The fundamental structure and functions of the encoder part are the same as those of the encoder part shown in Fig. 1 or Fig. 4.

More specifically, the encoder part comprises a disc-shaped moving scale 1 on which an optical code is formed in a known manner in a pattern of light transmitting area/nontransparent area, a light source part 2 that irradiates light onto the moving scale 1, fixed slits 3, and a light receiving part 4 that receives signal light of a plurality of channels including A phase and B phase through apertures formed in the respective fixed slits, and the encoder part is configured such that electrical signals corresponding to signal light of each channel are outputted from the light receiving part 4.

The fluid bearing motor part is composed of a motor shaft 8, a rotor 9 that is integrally supported by the motor shaft 8, a stator 20 and fluid bearings 21 that support the motor shaft 8 in a state in which the motor shaft 8 can rotate freely around the axis K-K. The fluid bearings 21 are conventional, and fulfill a bearing function by maintaining a state in which the central axis of the motor shaft 8 corresponds with the axis K-K by receiving a supply of a high-pressure fluid from a fluid supply source (not shown).

The stator 20 is similar to the stator 10 in the example illustrated in Fig. 4, and supports the light source part 2, fixed slits 3 and light receiving part 4 in a fixed state so that the relative positional relationship among these elements is always kept constant. The moving scale 1 is attached to the motor shaft 8 and, as described in the foregoing, the fundamental function of the encoder part is to determine the rotational position/speed of the motor shaft 8.

Since a fluid bearing motor attached with an optical encoder having the above-described structure supports with fluid bearings the motor shaft 8 that revolves together with the rotor 9, in general, a force constraining the motor shaft 8 and the rotor 9 in a direction of the axis K-K is liable to weaken. Therefore, the moving scale 1 attached to the motor shaft 8 is liable to undergo a displacement in the direction of the axis K-K. As described in the foregoing embodiments, this displacement can be monitored by monitoring the amplitude of signals obtained by each light receiving element of the light receiving part 4.

That is, similarly to the foregoing embodiments, by detecting the amplitude of a signal of any phases (in this case, A phase or B phase) obtained by the respective light receiving elements of the light receiving part 4, a displacement between the moving scale 1 and the fixed slits 3 can be identified, whereby a displacement in a perpendicular direction (direction along the axis K-K) relative to a direction of movement (direction of rotational movement of the rotor 9) of the rotor 9 (moving part of the motor) can be monitored. The monitoring circuit shown in Fig. 3 can also be applied to this embodiment. More specifically, similarly to the foregoing embodiments, an output Vin of a light receiving element of the light receiving part 4 is held as a peak voltage by a peak hold device, and this value is compared with a peak voltage Vref at normal operation to obtain an output voltage Vo as a monitored output. In this embodiment, as in the case of the foregoing embodiments, an A-phase or B-phase signal can be used for the light receiving element output Vin, a signal of a different phase may also be used as long as it allows displacement between a moving scale and fixed slits to be detected in the form of amplitude, a plurality of phase signals can also be mixed for the output Vin, a peak voltage value that was measured during a normal operation may be used as peak voltage Vref at normal operation, and further, a monitored output can be notified or displayed or the like by applying appropriate known technology to display the monitored output Vo with a meter or numerical display or the like, and when a load is over a predetermined threshold level an operator can be notified by an alarm or the like.

As described above, when a load (external force) is applied to the rotor 9 or the motor shaft 8 in the direction of the axis K-K, a displacement of the moving scale 1 along the axis K-K is liable to occur, as a motor uses fluid bearings. With such a displacement of the moving scale 1, it is possible to sensitively detect a load (force having a component in a perpendicular direction relative to a movement direction) applied to the rotor 9 that is the moving part of the fluid bearing motor. More specifically, the aforementioned monitored output Vo can be used as an indicator for detecting an excessive load applied to a moving part (rotor 9) of the fluid bearing motor in a perpendicular direction relative to the direction of movement thereof.

As described in the foregoing, the monitored output Vo represents an external force applied to the motor shaft 8, because, as the greater the external force applied to the motor shaft 8 is, the more the displacement in the perpendicular direction relative to the rotational direction is. In Fig. 5, when a force which acts to cause a displacement in the rightward direction is applied, Vo shows a positive value, and when a force which acts to cause a displacement in the opposite direction is applied, Vo shows a negative value. Thus, for example, a suitable threshold value may be previously set for an absolute value of the monitored output Vo, so that, when an absolute value of the monitored output Vo exceeds the threshold value, displaying or issuing of alarm or the like is performed to notify an operator of an excessive load.

## Claims

1. A monitoring apparatus for an optical encoder having a light source, a moving scale, fixed slits and a light receiving part, comprising:
means for monitoring an amplitude of an electrical signal generated on the basis of a light detected by the light receiving part, and detecting displacement between the moving scale and the fixed slits on the basis of the monitored amplitude.

2. A monitoring apparatus for an optical encoder having a light source, a moving scale, fixed slits and a light receiving part, comprising:
means for monitoring an amplitude of an electrical signal generated on the basis of a light detected by the light receiving part, and detecting an excessive load that is applied in a perpendicular direction relative to a position reading direction of the optical encoder on the basis of the monitored amplitude.

3. Amonitoring apparatus for a motor attached with an optical encoder having a light source, a moving scale, fixed slits and a light receiving part, comprising:
means for monitoring an amplitude of an electrical signal generated on the basis of a light detected by the light receiving part, and detecting a displacement of a moving part of the motor in a perpendicular direction relative to a direction of movement of the moving part on the basis of the monitored amplitude.

4. Amonitoring apparatus for a motor attached with an optical encoder having a light source, a moving scale, fixed slits and a light receiving part, comprising:
means for monitoring an amplitude of an electrical signal generated on the basis of a light detected by the light receiving part, and detecting an excessive load that is applied to a moving part of the motor in a perpendicular direction relative to a direction of movement of the moving part on the basis of the monitored amplitude.

5. Themonitoring apparatus according to claim 3 or 4, wherein the motor is a fluid bearing motor.

6. The monitoring apparatus according to any one of claims 1 to 4, wherein the amplitude of an electrical signal generated on the basis of a light detected by the light receiving part is monitored using a circuit including a peak hold device and a comparator.
